# EUROPÄISCHE PATENTSCHRIFT

(11) **EP 1 227 931 B1**
(45) Veröffentlichungstag und Bekanntmachung des Hinweises auf die Patenterteilung: **24.09.2003**
(21) Anmeldenummer: 00964001.2
(22) Anmeldetag: 04.08.2000
(51) Int. Cl.: B32B 15/08, B65D 75/20, B65D 75/58

(54) **PORTIONSVERPACKUNG FÜR GELFUTTER**
PORTION PACKAGING FOR GEL FEED
EMBALLAGE POUR PORTIONS DE NOURRITURE SOUS FORME DE GEL

(30) Priorität: 26.08.1999 DE 19940592
(43) Veröffentlichungstag der Anmeldung: 07.08.2002
(73) Patentinhaber: Tetra GmbH, 49324 Melle (DE)
(72) Erfinder: KÜRZINGER, Hubert, 49324 Melle (DE); KUHLMANN, Dietmar, 31655 Stadthagen (DE)
(74) Vertreter: Miller, Andreas, Dr.
(86) Internationale Anmeldenummer: EP0007584
(87) Internationale Veröffentlichungsnummer: WO01014134

(56) Entgegenhaltungen:
- EP-A- 0 276 908
- US-A- 4 131 200
- DATABASE WPI Section Ch, Week 198608 Derwent Publications Ltd., London, GB; Class A17, AN 1986-050828 XP002157022 & JP 61 002555 A (TOYO ALUMINIUM KK), 8. Januar 1986 (1986-01-08)

## Beschreibung

Die Erfindung betrifft eine Verpackung für Tierfutter.

Zur Fütterung von Tieren, insbesondere von Wassertieren in Aquarien, kann prinzipiell Lebendfutter, gefriergetrocknetes Naturfutter, Frostfutter und Trockenfutter verwendet werden. In Form von gefrostetem Naturfutter werden an Warm- und Kaltwasserzierfische in Süß- und Seewasseraquarien z.B. Salinenkrebse, Krill, Wasserflöhe, Bachflohkrebse, Schlammröhrenwürmer, rote und weiße Mückenlarven, Zooplankton, Fischrogen oder Rinderherz verfüttert. Spezialisierte Aquarianer verwenden oft ausschließlich Lebendfutter, gefriergetrocknetes Naturfutter und/oder Frostfutter. Die überwiegende Mehrzahl der Aquarianer verabreicht jedoch Trockenfutter, also Flocken, Extrudate, Tabletten oder Pellets, zum Teil in Kombination mit den anderen Futterarten. Als Verpackung für Trockenfutter werden vor allem kleinere Behälter aus Glas oder Kunststoff mit wiederverschließbarem Deckel verwendet.

Aus der WO 99/12430 ist ein Futter für Wassertiere bekannt, das in Form eines viskosen Gels vorliegt. Das gelartige Futter ist insbesondere für Warm- und Kaltwasser-Zierfische im Aquarium geeignet und kann als Ersatz für Frostfutter eingesetzt werden. Allerdings besteht bei diesem Futter das Problem einer extremen Anfälligkeit gegenüber mikrobiologischem Verderb. Das Futter besteht zu ca. 82% aus Wasser, der Rest sind überwiegend Proteinträger, welche mikrobiologisch belastet sein können. Zur Haltbarmachung kommt ein Pasteurisationsprozeß daher nur in Verbindung mit Konservierungsstoffen in Frage. Die üblichen Konservierungsmittel zeigen jedoch einen sehr negativen Einfluß auf das Freßverhalten insbesondere von Fischen (schlechte Akzeptanz). Zudem sind viele der Konservierungsmittel nur im sauren Milieu wirksam, wodurch der Produktgeruch verfälscht wird, was wiederum zu einer schlechten Akzeptanz führt.

Die als Verpackung für Trockenfutter bekannten Behälter aus Glas oder Kunststoff kommen als Verpackung für das in der WO 99/12430 beschriebene gelartige Futter ebensowenig in Frage wie etwa hitzesterilisierbare Portionspackungen aus Aluminiumfolie wie sie z.B. für Milch oder Marmelade Verwendung finden. Diese Verpackungen haben sich bei der Verwendung als Tierfutterverpackung als ungeeignet erwiesen. Nachteilig an diesen Verpackungen ist unter anderem, daß das Futter beispielsweise mit einem Löffel entnommen werden muß, da eine Portionierung des Futters ohne weitere Hilfsmittel nicht möglich ist. Das auf diese Weise entnommene Futter erweist sich als wenig attraktiv für Fische, da es im Wasser rasch zu Boden sinkt.

Denkbar wäre die Verwendung von Verpackungen aus speziellen Folien wie sie für Senf- und Ketchup-Portionspackungen bekannt sind. Diese Folien weisen aber im Hinblick auf die Verwendung als Verpackung für Tierfutter mehrere Nachteile auf. Zum einen besitzen sie ein sehr schlechtes Öffnungsverhalten beim Aufreißen von Hand, zum anderen sind die genannten Verpackungen nicht hitzesterilisierbar sowie nur bedingt undurchlässig für Sauerstoff. Sterilisierbarkeit durch Hitze ist aber eine unabdingbare Voraussetzung für Tierfutterverpackungen, wenn eine genügende Haltbarkeit des Futters erreicht werden soll. Eine Mindesthaltbarkeit von z.B. zwei Jahren ist durch einen Pasteurisationsprozeß alleine nicht erreichbar.

Ein Sterilisationsprozeß unter Vermeidung von mikrobiologisch wirksamen Konservierungsmitteln weist im Vergleich zu einem Pasteurisationsprozeß die Vorteile einer besseren Akzeptanz des Futters durch die Tiere, einer Verkürzung der zur Konservierung notwendigen Prozeßzeit und die Gewährleistung einer Mindesthaltbarkeit von zwei Jahren auf.

Geeignete Tierfutterverpackungen müssen außerdem eine hohe Sauerstoffundurchlässigkeit sowie Lichtundurchlässigkeit aufweisen. Dies ist notwendig, weil durch Sauerstoff die in dem Tierfutter enthaltenen Fette oxidiert werden, was zu Ranzigkeit führt, während durch Lichteinfall Vitamine des Tierfutters abgebaut werden. Materialien mit einer genügenden Undurchlässigkeit für Sauerstoff weisen aber eine zunehmend schlechtere Flexibilität auf. Dadurch sind diese Verpackungen nicht zufriedenstellend ausdrückbar, was insbesondere bei der Portionierung von geringen Futtermengen einen Nachteil darstellt.

Als eine weitere Anforderung für Tierfutterverpackungen ist eine möglichst geringe Wasserdurchlässigkeit der Verpackung zu nennen. Dadurch wird ein Austrocknen des Futters verhindert.

Es soll eine Verpackung für Tierfutter, insbesondere Wassertierfutter, geschaffen werden, die neben einer ausreichenden Lagerbarkeit auch eine leichte Handhabbarkeit und Portionierung des Futters gewährleistet. Diese Aufgabe wird erfindungsgemäß durch die Verpackung für Tierfutter gemäß unabhängigem Patentanspruch 1, das Verfahren gemäß unabhängigem Patentanspruch 7 und die Verwendung gemäß unabhängigem Patentanspruch 9 gelöst.

Die erfindungsgemäße Verpackung fÜr Tierfutter besteht aus einer Folie, die durch Kaschieren von drei verschiedenen Folien hergestellt wird. Unter "Kaschieren" ist allgemein das Zusammenpressen oder Walzen von zwei oder mehreren Folienbahnen zu einer mehrlagigen, dickeren Folienbahn zu verstehen. Das Zusammenfügen der Folien kann dabei durch Temperaturerhöhung beim Pressen oder Walzen und/oder durch Klebstoffzusatz erfolgen.

Die erfindungsgemäße Verpackung besteht aus einer dreilagigen Folie, nämlich einer aus chloriertem Polypropylen (Cpp) bestehenden Folie, einer Aluminiumfolie und einer Folie aus Polyethylenterephtalat (PETP). Diese 3 Folien sind durch das oben beschriebene "Kaschieren" zu einer dreischichtigen Folie verbunden, wobei die Aluminiumfolie mit beiden anderen Folien in Kontakt steht, die Aluminiumfolie bildet also die mittlere Schicht. Im Folgenden wird der Einfachheit halber diese dreischichtige Folie als eine auf beiden Seiten beschichtete Aluminiumfolie bezeichnet. Diese Aluminiumfolie ist also auf der mit dem Tierfutter in Kontakt stehenden Seite mit chloriertem Polypropylen (Cpp) und auf der gegenüberliegenden Seite mit Polyethylenterephthalat (PETP) beschichtet.

Die Dicke der dreischichtigen Folie beträgt zwischen 20 und 200 µm, wobei die Beschichtung mit Polyethylenterephthalat eine Dicke zwischen 4 und 40 µm, die Aluminiumfolie eine Dicke zwischen 3 und 30 µm und die Beschichtung mit
chloriertem Polypropylen eine Dicke zwischen 13 und 130 µm aufweist. Bevorzugt wird eine Folie mit einer Dicke zwischen 40 und 100 µm, insbesondere zwischen 52 und 70 µm, wobei die Beschichtung mit Polyethylenterephthalat eine Dicke zwischen 8 und 20 µm, insbesondere zwischen 10 und 14 µm, die Aluminiumfolie eine Dicke zwischen 6 und 15 µm, insbesondere zwischen 7 und 11 µm und die Beschichtung mit chloriertem Polypropylen eine Dicke zwischen 26 und 65 µm, insbesondere zwischen 35 und 45 µm aufweist. Ganz besonders bevorzugt wird eine Folie, deren Dicke rund 61 µm beträgt, wobei die Beschichtung mit Polyethylenterephthalat eine Dicke von rund 12 µm, die Aluminiumfolie eine Dicke von rund 9 µm und die Beschichtung mit chloriertem Polypropylen eine Dicke von rund 40 µm aufweist.

Die beschriebene Folie kann hitzesterilisiert werden, weist eine genügende Undurchlässigkeit für Sauerstoff auf und besitzt eine genügende Flexibilität. Durch die hervorragende Eignung der Folie zur Sterilisation durch Hitze sowie die ausgezeichneten Eigenschaften als Sauerstoff-Barriere wird eine Lagerungsstabilität von gelartigem Futter gemäß der WO 99/12430 von zwei Jahren erreicht. Diese ausgezeichnete Haltbarkeit wird trotz Verzicht auf mikrobiologisch wirksame Konservierungsmittel wie Calciumpropionat, Kaliumsorbat, Zitronensäure, Milchsäure, Kochsalz oder Seesalz erreicht. Die gute Flexibilität der Folie gewährleistet eine leichte Ausdrückbarkeit und damit einfache Portionierbarkeit des Futters auch bei geringen Futterportionen pro Packung zwischen 1 und 15 g, insbesondere so geringen Mengen wie 2 bis 4 g. Der Packungsinhalt kann durch die leichte Ausdrückbarkeit in noch geringere Portionen unterteilt werden.

Insbesondere im Hinblick auf die Portionierbarkeit, aber auch ganz allgemein zur erleichterten Handhabbarkeit kann die erfindungsgemäße Verpackung in einer speziellen äußeren Form Verwendung finden. Ein beliebig geformtes Stück der dreischichtigen Folie wird dazu um 180° gleichmäßig umgelegt, sodaß zwei mit Cpp beschichtete Seiten aufeinander zu liegen kommen. Das Umlegen erfolgt nicht mit besonderer Intensität, da kein Knick in der Folie entstehen darf, vielmehr soll ein Hohlraum gebildet werden, der zur Aufnahme des Tierfutters dient. Dieser Hohlraum wird in seinem Außenbereich durch Heißversiegelung, also durch Pressen bei erhöhter Temperatur, der beiden Folienlagen verschlossen.

Der Hohlraum weist erfindungsgemäß einen flaschenhalsartigen Fortsatz auf. Der heißversiegelte Teil der Folie wird so perforiert, daß beim Öffnen von Hand eine Öffnung quer zu dem flaschenhalsartigen Fortsatz des Hohlraums gebildet wird. Die dreischichtige Folie läßt sich entlang des perforierten Einschnitts exakt von Hand mit zwei parallelen Abreißkanten abtrennen und bildet dabei eine Öffnung in dem Hohlraum, die so dimensioniert ist, daß ein dünner, wurmförmiger Futterstrang ausgedrückt werden kann.

Der Vorteil dieser Art von Portionierung des Tierfutters wird besonders deutlich, wenn das Futter für Wassertiere im Süß- und Seewasser, insbesondere Fische, Shrimps und andere Invertebraten verwendet wird. Soll das Futter sowohl fÜr Oberflächenfische und für Fische der mittleren Zonen, als auch für Bodenfische und andere bodenbewohnende Lebewesen bereitgestellt werden, dann muß das Futter nämlich lange genug obenauf schwimmen, um die Oberflächenfische satt werden zu lassen, es muß lange genug im Wasser schweben, um Fische der mittleren Zonen zu sättigen, und es muß in der richtigen Geschwindigkeit im kompakten Zustand sinken, um so von Bodenfischen noch voll aufgenommen werden zu können.

Der oben beschriebene wurmförmige Futterstrang weist genau diese Eigenschaften auf. Neben der Tatsache, daß er im Wasser aufgrund seiner Eigenschaften stabil bleibt und sich nicht sofort auflöst, sinkt er zudem nur relativ langsam ab und besitzt auf diese Weise genügende Attraktivität für sämtliche Aquarienbewohner. Neben der Dichte des Wassertierfutters spielt für diese Eigenschaften natürlich auch der Querschnitt in Absinkrichtung der Futterportion eine entscheidende Rolle. Ein langsames Absinken kann nur dann erreicht werden, wenn die Futterportion einen relativ großen Querschnitt in Absinkrichtung aufweist, da dann der Strömungsauftrieb genügend entgegenwirkt. Ein optimales Verhältnis wird durch das Ausdrücken aus dem flaschenhalsartigen Fortsatz des Hohlraums der erfindungsgemäßen Verpackung erreicht.

Mit dem flaschenhalsartigen Fortsatz sind verschiedene Applikationsformen realisierbar. Beliebig lange wurmförmige Stücke können auf die Wasseroberfläche fallengelassen werden. Diese Stücke sinken dann zu Boden. Durch vorsichtiges Dosieren kurzer wurmförmiger Stücke direkt auf die Wasseroberfläche schwimmen diese Stücke längere Zeit an der Wasseroberfläche. Ein direktes Füttern einzelner Fische ist möglich, indem man den flaschenhalsartigen Fortsatz unter Wasser hält und das Futter dem Fisch direkt ins Maul dosiert.

Grundsätzlich kann die erfindungsgemäße Verpackung für alle Tierfutterprodukte, deren Haltbarkeit durch Sterilisation verlängerbar ist, verwendet werden. Der Schwerpunkt der vorliegenden Erfindung liegt aber auf einer Tierfutterverpackung für Wassertiere im Süß- und Seewasser, insbesondere Fische, Shrimps und andere Invertebraten.

Die Erfindung soll nachfolgend anhand eines Ausführungsbeispiels im Zusammenhang mit den Zeichnungen näher erläutert werden. Es zeigen
- Fig. 1: eine Aufsicht auf die erfindungsgemäße Verpackung für Tierfutter;
- Fig. 2: einen Schnitt entlang der Linie II durch die Fig. 1 (Blickrichtung entspricht der Pfeilrichtung in Fig. 1);
- Fig. 3: einen Schnitt entlang der Linie III durch die Fig. 1 (Blickrichtung entspricht der Pfeilrichtung in Fig. 1);
- Fig. 4: eine erfindungsgemäße Verpackung für Tierfutter;
- Fig. 5: zwei zusammenhängende Tierfutterverpackungen;
- Fig. 6: einen Schnitt entlang der Linie VI durch die Fig. 5 (Blickrichtung entspricht der Pfeilrichtung in Fig. 5).

Verschiedene Folien wurden im Hinblick auf ihre Verwendbarkeit als Verpackungsmaterial für Tierfutter untersucht. Die verwendeten Folien sind in der Tabelle 1 zusammengefaßt:

### Tabelle 1:

- Folie A:: ET-SiOₓ (12 µm) / SiOₓ-ET (12 µm) / PP (60 µm)
- Folie B:: ET-SiOₓ (12 µm) / PP (60 µm)
- Folie C:: ET (12 µm) / AL (9 µm) / ET (12 µm) /PE (60 µm)
- Folie D:: PETP 12 µm) / AL (9 µm) / Cpp (40 µm)
(ET: Polyester; PP: Polypropylen; PE: Polyethylen; AL: Aluminium)

Aus den Folien A bis D wurden Verpackungen hergestellt, mit dem gelartigen Futter gemäß der WO 99/12430 befüllt und bei 121°C für 20 Minuten sterilisiert. Die Beurteilung verschiedenen Folienmaterialien erfolgte nach den in der Tabelle 2 angegebenen Kriterien.

### Tabelle 2:

- Aussehen:: Die Verpackungen sollen möglichst formbeständig sein, also nach der Sterilisation keine Knicke oder ähnliches aufweisen.
- Aufreißverhalten:: Die Verpackungen sollen mit möglichst geringem Kraftaufwand manuell zu öffnen sein, wobei eine saubere Rißkante und eine formbeständige Futteraustrittsöffnung entstehen soll.
- Kaschierung der Folienbahnen:: Der Zusammenhalt der einzelnen Folienbahnen untereinander soll auch nach der Sterilisation möglichst intensiv und beständig sein.
- Siegelnähte:: Die Verpackungen sollen an den Siegelnähten dicht sein.
- Foliendicke:: Die Futterdosierung aus der Verpackung soll möglichst einfach zu realisieren sein.
- Futterausformung:: Das Tierfutter soll aus der Verpackung in einem Strang austreten, der eine gewisse Ähnlichkeit mit einem Wurm aufweist.
- Sauerstoffdurchlässigkeit:: Die Sauerstoffdurchlässigkeit soll möglichst gering sein, da durch Sauerstoff im Futter enthaltene Fette oxidiert werden.
- Lichtschutz:: Der Lichtschutz soll möglichst stark sein, da durch Lichteinfall im Futter enthaltene Vitamine zerstört werden.

Die Ergebnisse der Untersuchungen sind in der Tabelle 3 zusammengefaßt.

**Tabelle 3:**

| | Folie A (Vergleich) | Folie B (Vergleich) | Folie C (Vergleich) | Folie D (Erfindung) |
|---|---|---|---|---|
| Aussehen | - - | - | 0 | + |
| Aufreißverhalten | - - | - | - | + |
| Kaschierung der | + | + | - - | + |
| Polienbahnen | | | | |
| Siegelnähte | + | + | + | + + |
| Foliendicke | - | + | - | + + |
| Futterstrangausformung | - | 0 | 0 | + + |
| Sauerstoffdurchlässigkeit | 0 | 0 | + | + |
| Lichtschutz | - | - | + | + |
| (+ +: sehr gut; +: gut; 0: durchschnittlich; -: schlecht; - -: sehr schlecht) | | | | |

Aus der Tabelle 3 wird deutlich, daß die Folie D, also die mit Polyethylenterephthalat (12 µm) und chloriertem Polypropylen (40 µm) beschichtete Aluminiumfolie (9 µm), die in der Tabelle 2 zusammengefaßten Anforderungen optimal erfüllt. Die Sauerstoffundurchlässigkeit sowie die Lichtundurchlässigkeit der Verpackung gewährleisten einen ausgezeichneten Schutz des Futters, da dieses sowohl vor Fettoxidation durch Sauerstoff als auch vor Vitaminabbau durch Lichteinfall bewahrt wird. Zudem weist die Folie D nur eine geringe Durchlässigkeit für Wasser auf, wodurch das Austrocknen des Futters verhindert wird.

Die Folie C zeigt erhebliche Schwächen in der Kaschierung der Folienbahnen, welche dadurch zum Ausdruck kommen, daß sich die Aluminiumschicht von den anderen Folienschichten ablöst. Die Folien A und B waren nach der thermischen Behandlung stark verknittert. Die Verpackungen ließen sich nur mit erheblichem Kraftaufwand öffnen, wobei eine unsaubere Rißkante entstand und die Produktaustrittsöffnung deformiert wurde.

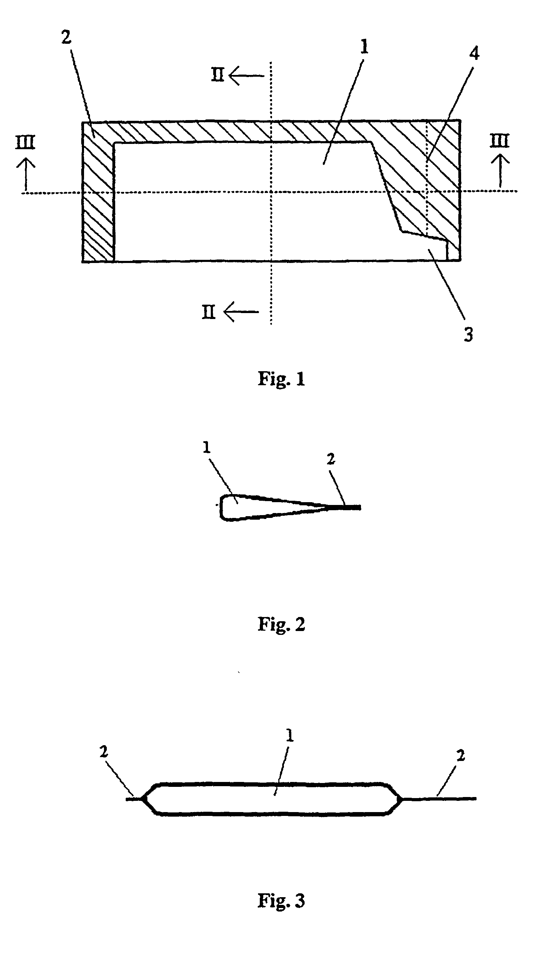

In Figur 1 ist eine bevorzugte Ausführungsform der erfindungsgemäßen Verpackung für Tierfutter gezeigt. Die Verpackung besteht aus zwei Lagen einer dreischichtigen Folie, wobei sich die mit chloriertem Polypropylen beschichteten Seiten gegenüberliegen. Die Außenseite der Aluminiumfolie ist mit Polyethylenterephthalat beschichtet. Die Dicke der Folie beträgt rund 61 µm wobei die Beschichtung mit Polyethylenterephthalat eine Dicke von rund 12 µm, die Aluminiumfolie eine Dicke von rund 9 µm und die Beschichtung mit chloriertem Polypropylen eine Dicke von rund 40 µm aufweist.

Die Verpackung besteht im wesentlichen aus einem Hohlraum (1) der zur Aufnahme des Wassertierfutters dient. Der Hohlraum (1) wird begrenzt durch einen Bereich (2), in dem die beiden Folienlagen durch Heißversiegelung, also durch Pressen bei erhöhter Temperatur, fest miteinander verbunden sind. Figur 2 zeigt einen Schnitt entlang der Linie II in Figur 1. Aus Figur 2 wird deutlich, daß der Hohlraum (1) nicht durch zwei separate Folien begrenzt wird, sondern daß vielmehr eine Folie so über sich selbst angeordnet wird, daß sich die mit Cpp beschichteten Seiten der Folie gegenüberliegen. Die beiden Lagen der Folie sind in dem Bereich (2) fest miteinander verbunden und begrenzen so den Hohlraum (1).

Figur 3 zeigt einen Schnitt entlang der Linie III in Figur 1. Aus Figur 3 sind ebenfalls die im Bereich (2) fest miteinander verbundenen Folienlagen, sowie der dazwischenliegende Hohlraum (1) zu erkennen.

Der Hohlraum (1) kann eine beliebige Form aufweisen, die aber an wenigstens einer Stelle einen flaschenhalsartigen Fortsatz (3) aufweist (Figur 1). Eine Perforierung (4) ist so in den heißversiegelten Teil (2) der Verpackung eingestanzt, daß beim Öffnen per Hand durch Aufreißen entlang der Perforierung (4) in dem flaschenhalsartigen Fortsatz (3) eine Öffnung gebildet wird. Durch diese Öffnung kann das Tierfutter in einfacher Weise in Form eines wurmartigen Strangs aus dem Hohlraum (1) gedrückt werden.

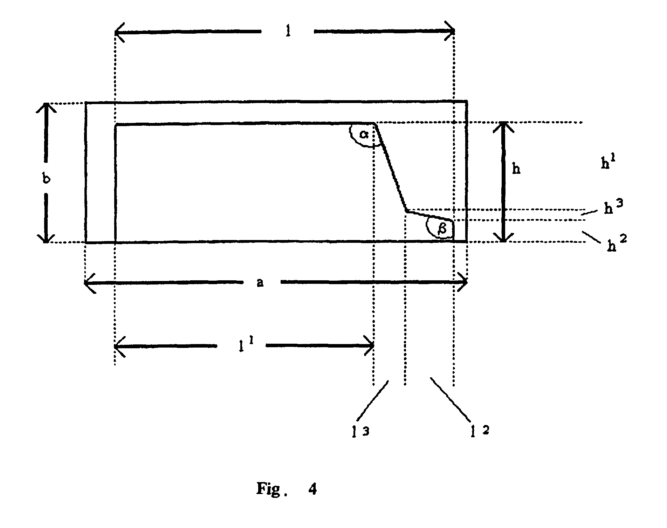

Gemäß der in Figur 1 dargestellten bevorzugten Ausführungsform besitzt die erfindungsgemäße Verpackung für Tierfutter eine im wesentlichen rechteckige Form. Der Hohlraum der Verpackung ist prinzipiell je nach seiner Dimensionierung zur Aufnahme einer beliebigen Menge von Tierfutter geeignet. Bevorzugt besitzt der Hohlraum aber ein Volumen, das zur Aufnahme einer Portionsmenge von Tierfutter geeignet ist. Dabei handelt es sich um eine Menge zwischen 1 und 15 g Tierfutter, bevorzugt 2 bis 4 g Tierfutter. Das in Figur 4 gezeigte Ausführungsbeispiel ist zur Aufnahme von 3 g Tierfutter geeignet, was die ganz besonders bevorzugte Ausführungsform der vorliegenden Erfindung darstellt.

Aus Gründen der Materialersparnis weist die erfindungsgemäße Verpackung einen möglichst kleinen Bereich (2) auf, in dem die beiden Folienlagen miteinander verbunden sind. Der Bereich (2) muß allerdings mindestens eine solche Ausdehnung aufweisen, daß ein unbeabsichtigtes Öffnen der Verpackung an einer anderen Position als entlang der dafür vorgesehenen Perforierung (4) verhindert wird.

In Figur 4 ist die Dimensionierung der erfindungsgemäß bevorzugten Verpackung dargestellt. Die Verpackung weist eine Länge a und eine Breite b auf. Der Hohlraum (1) weist eine Länge l und eine Breite h auf, wobei der Hohlraum aus einem rechteckigen Bereich der Länge l₁ und der Breite h und einem flaschenhalsartigen Fortsatz (3) der Länge l₂ und Breite h₂ besteht, wobei der flaschenhalsartige Fortsatz durch einen trapezförmigen Übergangsbereich mit dem rechteckigen Teil des Hohlraums verbunden ist. Der trapezförmige Übergangsbereich besitzt an der dem rechteckigen Teil des Hohlraums zugewandten Seite eine Breite h, an der dem flaschenhalsartigen Fortsatz zugewandten eine Breite h₂+h₃. Die Länge des trapezförmigen Übergangsbereichs wird mit l₃ bezeichnet.

Zur eindeutigen Beschreibung der Dimensionierung sind die Winkel (α und β in der Figur 4 eingetragen. Der Winkel α liegt zwischen der Begrenzung der Länge l₁ des rechteckigen Teils des Hohlraums, die dem Bereich zugewandt ist, in dem die beiden Folienlagen fest miteinander verbunden sind, und der Begrenzung der Breite h₁ des trapezförmigen Übergangsbereichs. Der Winkel β liegt zwischen der Begrenzung des flaschenhalsartigen Fortsatzes, die dem rechteckigen Teil des Hohlraumes abgewandt ist und der Begrenzung des flaschenhalsartigen Fortsatzes, der nicht mit der äußeren Begrenzung der Verpackung zusammenfällt.

In der erfindungsgemäß bevorzugten Ausführungsform können a, b, l, l₁, l₂, l₃, h, h₁, h₂, h₃, α und β die folgenden Werte annehmen:
30 mm ≤ a ≤ 150 mm, insbesondere 40 mm ≤ a ≤ 90 mm;
10 mm ≤ b ≤ 40 mm, insbesondere 15 mm ≤ b ≤ 28 mm;
21 mm ≤ 1 ≤ 140 mm, insbesondere 35 mm ≤ 1 < 80 mm;
20 mm ≤ l₁ ≤ 120 mm, insbesondere 32 mm ≤ l₁ ≤ 70 mm;
1 mm ≤ l₂ ≤ 15 mm, insbesondere 2 mm ≤ l₂ ≤ 7 mm;
0 ≤ l₃ ≤ 5 mm, insbesondere 1 mm ≤ l₃ ≤ 4 mm;
12 mm ≤ h ≤ 35 mm, insbesondere 15 mm ≤ h ≤ 25 mm;
11 mm ≤ h₁ ≤ 24 mm, insbesondere 13 mm ≤ h₁ ≤ 18 mm;
1 mm ≤ h₂ ≤ 8 mm, insbesondere 1 mm ≤ h₂ ≤ 5 mm;
0 ≤ h₃ ≤ 3 mm, insbesondere 1 mm ≤ h₃ ≤ 2 mm;
90° ≤ α ≤ 130°, insbesondere 100° ≤ α ≤ 120°
90° ≤ β ≤ 130°, insbesondere 100° ≤ β ≤ 120°
wobei die Bedingungen
l₃ ≤ l₂ ≤ l₁;
h₃ ≤ h₂ ≤ h₁;
l₁ + l₂ + l₃ = 1;
h₁ + h₂ + h₃ = h
gelten.

Für den Fall α = β = 90° weist die Verpackung keinen trapezförmigen Übergangsbereich auf. Für α < 90° ergibt sich eine spitz zulaufende Ecke des Hohlraums (1), die sich im Hinblick auf die leichte Ausdrückbarkeit des Tierfutters nachteilig auswirkt, da in ihr leicht Reste des Futters zurückbleiben können. Auch β < 90° erscheint ungeeignet, da der flaschenhalsartige Fortsatz in diesem Fall eine Engstelle aufweist, die sich ebenfalls als nachteilig beim Ausdrücken des Futters erweist.

Die bevorzugte Ausführungsform der vorliegenden Erfindung weist die Abmessungen a ≈ 85 mm, b ≈ 24 mm, 1 ≈ 78 mm, l₁ ≈ 66 mm, l₂ ≈ 6 mm, l₃ ≈ 3 mm, h ≈ 20 mm, h₁ ≈ 14 mm, h₂ ≈ 5 mm, h₃ ≈ 1 mm, α ≈ 110° sowie β ≈ 110° auf.

Es soll aber nochmals betont werden, daß sowohl die Verpackung als auch der Hohlraum zur Aufnahme des Wassertierfutters erfindungsgemäß jede beliebige Form aufweisen kann. Einzige Einschränkung der Beliebigkeit der Form ist das Vorhandensein des flaschenhalsartigen Fortsatzes (3), der die vorteilhaften Eigenschaften des ausgedrückten wurmartigen Futterstranges unterstützt.

Für den Fachmann selbstverständlich ist die Tatsache, daß der von den beiden Folienlagen gebildete Hohlraum (1) in jedem Fall ein etwas über das Volumen des darin enthaltenen Wassertierfutters hinausgehendes Volumen aufweist. Der Hohlraum (1) wird also nicht vollständig mit Tierfutter gefüllt, da in diesem Fall eine erhöhte Gefahr des ungewollten Platzens der Verpackung besteht.

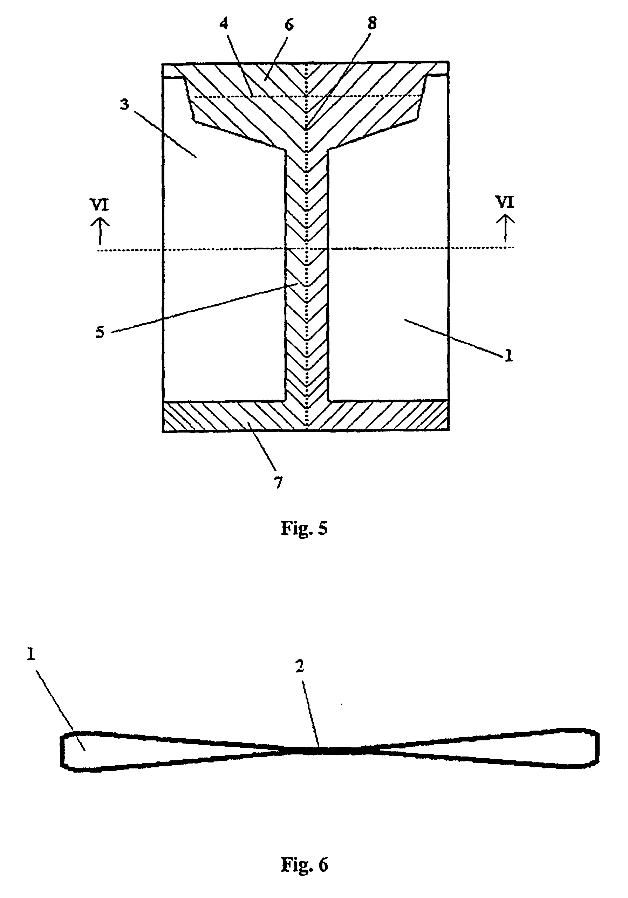

Zur Herstellung der Tierfutterverpackung werden aus der dreischichtigen Folie zwei in Längsrichtung zusammenhängende Drei-Rand-Siegelbeutel (siehe Fig. 5) hergestellt. Zu diesem Zweck werden beide Folienränder um 180° mit Hilfe einer Formschulter gleichmäßig umgelegt, so daß sich beide Folienränder in der Folienmitte treffen (Figur 6). Mit einem Formatwerkzeug erfolgt die Heißversiegelung von zunächst zwei Nähten, der Längsnaht (5) und der Kopfnaht (6). Durch die Kopfnaht (6) wird die Auslaufgeometrie der Tierfutterverpackung bestimmt. Die Breite des Hohlraums (1) wird durch das Formatwerkzeug auf einen flaschenhalsartigen oder auch schlauchähnlichen Fortsatz (3) reduziert (Fig. 5). Parallel zur Versiegelung erfolgt die Befüllung der Verpackung über ein Füllrohr. Anschließend wird der Boden im Bereich (7) versiegelt. Danach erfolgt die Perforation (8) an der Längsnaht als Abreißhilfe zur Trennung des Beutelpaares und die Perforation (4) am Kopf als Aufreißhilfe. Anschließend wird das Beutelpaar vom nachfolgenden Beutelpaar abgetrennt.

Grundsätzlich sind alle Tierfutterprodukte, deren Haltbarkeit durch Sterilisation verlängerbar ist, in die erfindungsgemäße Tierfutterverpackung abfüllbar. Der Hauptschwerpunkt der vorliegenden Erfindung liegt auf einer Tierfutterverpackung für Wassertiere im Süß- und Seewasser, insbesondere Fische, Shrimps und andere Invertebraten.

## Patentansprüche

1. Verpackung für Tierfutter, bestehend aus einer dreischichtigen Folie, wobei die Folie aus einer Aluminiumfolie besteht, die auf der mit dem Tierfutter in Kontakt stehenden Seite mit chloriertem Polypropylen und auf der gegenüberliegenden Seite mit Polyethylenterephthalat beschichtet ist.

2. Verpackung nach Anspruch 1, **dadurch gekennzeichnet, daß** die Dicke der dreischichtigen Folie zwischen 20 µm und 200 µm, insbesondere zwischen 40 µm und 100 µm beträgt, wobei die Beschichtung mit Polyethylenterephthalat eine Dicke zwischen 4 µm und 40 µm, insbesondere zwischen 8 µm und 20 µm, die Aluminiumfolie eine Dicke zwischen 3 µm und 30 µm, insbesondere zwischen 6 µm und 15 µm und die Beschichtung mit chloriertem Polypropylen eine Dicke zwischen 13 µm und 130 µm, insbesondere zwischen 26 µm und 65 µm aufweist.

3. Verpackung nach Anspruch 2, **dadurch gekennzeichnet, daß** die Dicke der dreischichtigen Folie zwischen 52 µm und 70 µm, insbesondere rund 61 µm beträgt, wobei die Beschichtung mit Polyethylenterephthalat eine Dicke zwischen 10 µm und 14 µm, insbesondere rund 12 µm, die Aluminiumfolie eine Dicke zwischen 7 µm und 11 µm, insbesondere rund 9 µm und die Beschichtung mit chloriertem Polypropylen eine Dicke zwischen 35 µm und 45 µm, insbesondere rund 40 µm aufweist.

4. Verpackung nach einem der vorhergehenden Ansprüche, **dadurch gekennzeichnet, daß** durch zwei Lagen der dreischichtigen Folie ein Hohlraum (1) zur Aufnahme des Tierfutters gebildet wird, wobei der Hohlraum (1) einen flaschenhalsartigen Fortsatz (3) aufweist.

5. Verpackung nach Anspruch 4, **dadurch gekennzeichnet, daß** die Verpackung eine im wesentlichen rechteckige Form aufweist und die zwei Lagen der dreischichtigen Folie im Außenbereich (2) der Verpackung fest miteinander verbunden sind.

6. Verpackung nach Anspruch 5, **dadurch gekennzeichnet, daß** die beiden fest miteinander verbundenen Folienlagen in einem dem flaschenhalsartigen Fortsatz (3) benachbarten Bereich mit einer Perforierung (4) versehen sind.

7. Verfahren zur Herstellung einer Verpackung für Tierfutter, **dadurch gekennzeichnet, daß** eine dreischichtige Folie wie in den Ansprüchen 1 bis 6 definiert, so gefaltet wird, daß sie über sich selbst in der Art angeordnet wird, daß sich zwei mit chloriertem Polypropylen beschichtete Seiten gegenüberliegen, und die zwei Lagen der dreischichtigen Folie im Außenbereich (2) der Verpackung durch Heißversiegelung fest miteinander verbunden werden, wodurch ein Hohlraum (1) mit einem flaschenhalsartigen Fortsatz (3) zur Aufnahme des Tierfutters gebildet wird.

8. Verfahren nach Anspruch 7, wobei die beiden fest miteinander verbundenen Folienlagen in einem dem flaschenhalsartigen Fortsatz (3) benachbarten Bereich (4) perforiert werden.

9. Verwendung der Verpackung gemäß einem der Ansprüche 1 - 6 als Verpackung für Futter für Wassertiere im Süß- und Seewasser, insbesondere Fische, Shrimps und andere Invertebraten.

## Claims

1. A packing for animal feed, consisting of a three layer foil consisting of an aluminum foil laminated with chlorinated polypropylene on the side being in contact with the animal feed and laminated with polyethylene terephthalate on the opposite side.

2. A packing according to Claim 1, **characterized in that** the thickness of the three layer foil is between 20 µm and 200 µm, in particular between 40 µm and 100 µm, the thickness of the polyethylene-terephthalate layer being between 4 µm and 40 µm, in particular between 8 µm and 20 µm, the thickness of the aluminum foil being between 3 µm and 30 µm, in particular between 6 µm and 15 µm, and the thickness of the layer consisting of chlorinated polypropylene being between 13 µm and 130 µm, in particular between 26 µm and 65 µm.

3. A packing according to Claim 2, **characterized in that** the thickness of the triple-layered foil is between 52 µm and 70 µm, in particular about 61 µm, the thickness of the polyethylene-terephthalate coating being between 10 µm and 14 µm, in particular about 12 µm, the thickness of the aluminum foil being between 7 µm and 11 µm, in particular about 9 µm, and the thickness of the coating consisting of chlorinated polypropylene being between 35 µm and 45 µm, in particular about 40 µm.

4. A packing according to any one of the preceeding Claims, **characterized by** two layers of the three layer foil forming a hollow space (1) showing a bottle-neck-like protrusion (3) for storing the animal feed.

5. A packing of Claim 4, **characterized by** an essentially rectangular form, the two layers of the triple-layered foil being firmly joined in the external zone (2) of the packing.

6. A packing of Claim 5, **characterized in that** the two firmly joined foils in a zone next to the bottle-neck-like protrusion (3) show a perforation (4).

7. A process for manufacturing a packing for animal feed, **characterized in that** a three layer foil as defined in anyone of the Claims 1 to 6 is positioned on top of itself and folded in a way that two sides laminated with chlorinated polypropylene are facing each other while the two layers of the triple-layered foil in the external zone (2) of the packing are firmly joined by melt-sealing in order to form a hollow space (1) with a bottle-neck-like protrusion (3) for storing the animal feed.

8. A process according to claim 7, according to which the two foil layers firmly connected with one another are perforated in a region (4) neighbouring the bottle neck-like elongation (3).

9. Use of the packing according to one of claims 1 to 6 as packing for feed for aquatic animals in fresh and sea water, especially fish, shrimps and other invertebrates.

## Revendications

1. Emballage pour aliments pour animaux, formé d'une feuille à trois couches, ladite feuille étant formée d'une feuille d'aluminium, qui, sur la face en contact avec les aliments pour animaux, est enduite de polypropylène chloré et, sur la face opposée, est enduite de téréphtalate de polyéthylène.

2. Emballage selon la revendication 1, **caractérisé en ce que** l'épaisseur de la feuille à trois couches est comprise entre 20 µm et 200 µm, en particulier entre 40 µm et 100 µm, le revêtement en téréphtalate de polyéthylène ayant une épaisseur comprise entre 4 µm et 40 µm, en particulier entre 8 µm et 20 µm, la feuille d'aluminium ayant une épaisseur entre 3 µm et 30 µm, en particulier entre 6 µm et 15 µm et le revêtement en polypropylène chloré ayant une épaisseur comprise entre 13 µm et 130 µm, en particulier entre 26 µm et 65 µm.

3. Emballage selon la revendication 2, **caractérisé en ce que** l'épaisseur de la feuille à trois couches est comprise entre 52 µm et 70 µm, notamment est de 61 µm, le revêtement en téréphtalate de polyéthylène ayant une épaisseur comprise entre 10 µm et 14 µm, notamment ayant 12 µm, la feuille d'aluminium ayant une épaisseur comprise entre 7 µm et 11 µm, notamment ayant 9 µm, et le revêtement en polypropylène chloré ayant une épaisseur entre 35 µm et 45 µm, notamment ayant 40 µm.

4. Emballage selon l'une des revendications précédentes, **caractérisé en ce que**, entre deux couches de la feuille à trois couches, on forme un espace creux (1) pour recevoir les aliments pour animaux, l'espace creux (1) présentant une extrémité (3) en forme de col d'une bouteille.

5. Emballage selon la revendication 4, **caractérisé en ce que** l'emballage présente une forme sensiblement rectangulaire et les deux couches de la feuille à trois couches de la zone extérieure (2) de l'emballage sont reliées ensemble rigidement.

6. Emballage selon la revendication 5, **caractérisé en ce que** les deux couches de feuille reliées rigidement entre elles sont munies d'une perforation (4) dans une zone voisine d'une extrémité (3) en forme de col de bouteille.

7. Procédé de fabrication d'un emballage pour alimentation animale, **caractérisé en ce qu'**une feuille à trois couches, tel que définie aux revendications 1 à 6, est pliée de manière à se replier sur elle-même de sorte que deux faces, enduites de polypropylène chloré, se fassent face et que les deux couches de la feuille à trois couches soient reliées entre elles rigidement dans la zone extérieure (2) de l'emballage par thermo-scellage, en formant un espace creux (1), présentant une extrémité (3) en forme de col de bouteille, pour recevoir les aliments pour animaux.

8. Procédé selon la revendication 7, les deux couches de feuille reliées rigidement ensemble étant perforées dans une zone (4) voisine de l'extrémité (3) en forme de col de bouteille.

9. Utilisation de l'emballage selon l'une des revendications 1 à 6 comme emballage d'aliments pour animaux aquatiques d'eau douce ou d'eau de mer, en particulier de poissons, de crevettes et d'invertébrés.
